(19) Europäisches Patentamt
European Patent Office
Office européen des brevets

(11) Veröffentlichungsnummer: **0 401 662 A2**

(12) **EUROPÄISCHE PATENTANMELDUNG**

(21) Anmeldenummer: **90110249.1**

(22) Anmeldetag: **30.05.90**

(51) Int. Cl.5: **C08G 64/30, C08G 63/19, C08G 63/81**

(30) Priorität: **08.06.89 DE 3918690**

(43) Veröffentlichungstag der Anmeldung: **12.12.90 Patentblatt 90/50**

(84) Benannte Vertragsstaaten: **BE DE FR GB NL**

(71) Anmelder: **BASF Aktiengesellschaft**
**Carl-Bosch-Strasse 38**
**D-6700 Ludwigshafen(DE)**

(72) Erfinder: **Lieder, Robert Ralf, Dr.**
**Albert-Einstein-Allee 10**
**D-6703 Limburgerhof(DE)**
Erfinder: **Heinz, Gerhard, Dr.**
**Im Vogelsang 2**
**D-6719 Weisenheim(DE)**

(54) **Verfahren zur Herstellung von aromatischen Polycarbonaten und Polyarylaten.**

(57) Verfahren zur Herstellung von aromatischen Polycarbonaten und Polyarylaten durch Umesterung von Kohlensäureestern oder Estern aromatischer Dicarbonsäuren in einem hochsiedenden Lösungsmittel der Formel

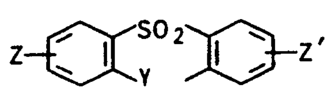

(I)

(Y = 2H, chem. Bdg. oder -O-; Z und Z′ = H oder Phenyl).

EP 0 401 662 A2

## Verfahren zur Herstellung von aromatischen Polycarbonaten und Polyarylaten

Die vorliegende Erfindung betrifft ein Verfahren zur Herstellung von aromatischen Polycarbonaten und Polyarylaten durch Umsetzung von Kohlensäureestern oder Estern aromatischer Dicarbonsäuren mit aromatischen Dihydroxyverbindungen.

Verfahren zur Herstellung von aromatischen Polycarbonaten und Polyarylaten sind an sich bekannt. Üblicherweise werden die genannten Polykondensate durch Schmelzumesterung von Kohlensäureestern oder Estern aromatischer Dicarbonsäuren mit aromatischen Dihydroxyverbindungen hergestellt, gegebenenfalls unter Mitverwendung von Katalysatoren. Derartige Verfahren werden beispielsweise in der US-A-32 75 601 und der US-A-2 946 766 beschrieben.

Nachteilig bei diesen Verfahren ist jedoch, daß die erhaltenen Produkte häufig eine unerwünschte Farbe aufweisen. Gemäß der DE-A-24 39 552 wird vorgeschlagen, diese unerwünschte farbliche Veränderung - die auf den Einfluß von Spuren von Sauerstoff zurückgeführt wird - dadurch zu vermeiden, daß man Ausgangsverbindungen einsetzt, die in Reinsubstanz die feste Phase nicht durchlaufen haben; im übrigen entsprechen die Bedingungen denen der üblichen Schmelzumesterung.

Die Farbe der so erhältlichen Produkte ist zwar verbessert, doch löst auch dieses Verfahren nicht das zweite Problem der Schmelzumesterungsverfahren, nämlich, daß Produkte mit hohem Molekulargewicht nur sehr schwer herzustellen sind, da die Schmelzviskosität der Reaktionsmischung so hoch ist, daß die Reaktionsgeschwindigkeit stark abnimmt und die Entfernung niedermolekularer Reaktionsprodukte stark erschwert wird.

Der vorliegenden Erfindung lag daher die Aufgabe zugrunde, ein Verfahren zur Herstellung von aromatischen Polycarbonaten und Polyarylaten zur Verfügung zu stellen, welches die vorstehend geschilderten Nachteile vermeidet.

Diese Aufgabe wird erfindungsgemäß durch ein Verfahren gemäß Anspruch 1 gelöst.

Nach dem erfindungsgemäßen Verfahren wird die Umesterung der Kohlensäureester oder Ester aromatischer Carbonsäuren mit aromatischen Dihydroxyverbindungen in einem hochsiedenden Lösungsmittel der Formel I durchgeführt,

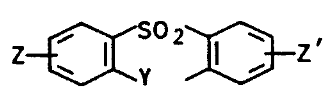

(I)

wobei Y, Z und Z′ die in Anspruch 1 angegebene Bedeutung haben. Insgesamt umfaßt diese Formel folgende Lösungsmittel

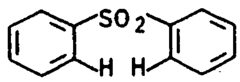

I1

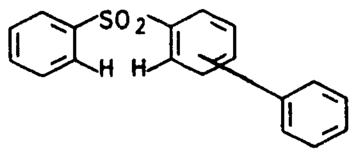

I2

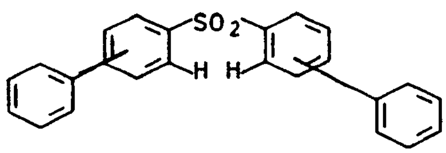

I3

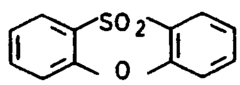

I4

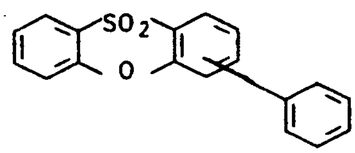

I5

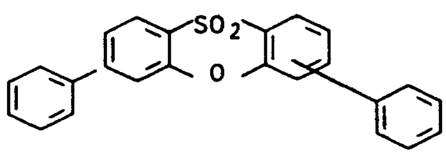

I6

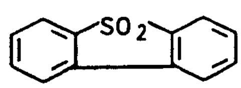

I7

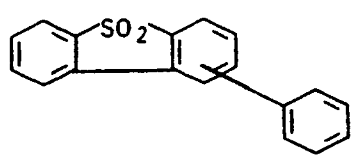

I8

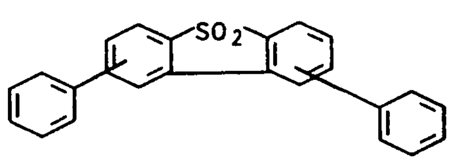

I9

Von diesen werden Diphenylsulfon (11) und dessen Derivate 12 und 13, insbesondere jedoch Diphenylsulfon selbst, bevorzugt.

Als Kohlensäureester können sowohl aromatische als auch aliphatische Ester

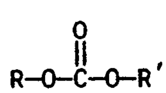

eingesetzt werden, wobei Ester

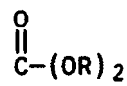

d.h. symmetrische Kohlensäureester bevorzugt werden. R und R′ können eine $C_1$-$C_8$-Alkyl, $C_4$-$C_8$-Cycloalkyl oder eine Phenyl- oder Naphthylgruppe sein, wobei die Phenyl- oder Naphthylgruppen substituiert sein können. Als Beispiele für $C_1$-$C_8$-Alkylgruppen seien hier nur Methyl-, Ethyl-, i- und n-Propyl-, n-Butyl-, n-Octyl- und i-Octylgruppen, als Beispiel für Cycloalkylgruppen die Cyclohexylgruppen genannt.

Bevorzugt für die Herstellung von Polycarbonaten wird im allgemeinen Diphenylcarbonat.

Für die Ester aromatischer Carbonsäuren (Dicarbonsäuren) gilt hinsichtlich der Alkoholkomponente das vorstehend für die Kohlensäureester Gesagte. Geeignete aromatische Dicarbonsäuren sind z.B. Terephthalsäure, Isophthalsäure, Phthalsäure, 2,7-Naphthalindicarbonsäure und 2,6-Naphthalindicarbonsäure, alkylsubstituierte Derivate dieser Säuren oder Mischungen mehrerer dieser Säuren.

Als aromatische Dihydroxyverbindungen kommen prinzipiell Verbindungen der allgemeinen Formel II in Betracht.

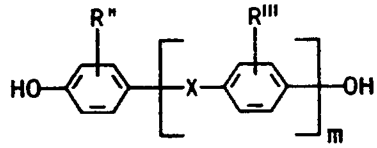

wobei X eine chemische Bindung, -O-, -S-, -CO-, $-SO_2-$ oder $-CR^1R^2-$ ($R^1$ und $R^2$ jeweils $C_1$-$C_8$-Alkylgruppen oder Phenylgruppen) und
R″ und R‴ unabhängig voneinander jeweils Wasserstoffatome, $C_1$-$C_6$-Alkylgruppen, $C_1$-$C_6$-Alkylgruppen, $C_1$-$C_6$-Alkoxygruppen oder ggf. substituierte Phenylgruppen darstellen.
m hat den Wert 0 oder 1.

Beispielhaft seien Hydrochinon, 4,4′-Dihydroxydiphenyl, 4,4, -Dihydroxidiphenylether, 4,4′-Dihydroxydiphenylsulfon und 2,2-Di(4-hydroxyphenyl)-propan (Bisphenol A) bzw. deren alkylsubstituierte Derivate genannt. Für Polycarbonate werden insbesondere Bisphenol A und Tetramethylbisphenoi A bevorzugt.

Unter Polycarbonaten im Sinn der Erfindung sollen auch Polyestercarbonate verstanden werden, die sowohl Ester- als auch Carbonat-Einheiten aufweisen.

Bevorzugte Polyarylate sind Polykondensate auf der Basis Hydrochinon, 4,4′-Dihydroxydiphenyl oder Bisphenol A und Terephthalsäure, ggf. in Mischung mit Isophthalsäure.

Bei der Umesterung können gegebenenfalls Umesterungskatalysatoren, insbesondere basische Katalysatoren wie Alkalimetallalkoholate oder Alkali-oder Erdalkalimetallcarbonate eingesetzt werden. Beispielhaft seien hier Natriummethylat und Kaliumcarbonat genannt, wovon Kaliumcarbonat bevorzugt wird.

Es versteht sich, daß vorzugsweise solche Katalysatoren verwendet werden, die nicht mit dem hochsiedenden Lösungsmittel der Formel I eine Reaktion eingehen.

Die Umesterung selbst wird im allgemeinen bei Temperaturen im Bereich von 130 bis 350, vorzugsweise von 140 bis 310 °C durchgeführt.

Dabei können die Ausgangsverbindungen, ggf. der Katalysator, und das hochsiedende Lösungsmittel gleichzeitig zusammengemischt und umgesetzt werden. Unter die allgemeine Formel I fallen auch Lösungsmittel, die bei Raumtemperatur fest sind. Bei Verwendung solcher Lösungsmittel wird die Umesterung natürlich oberhalb des Schmelzpunktes des Lösungsmittels durchgeführt.

Die Umesterung und Polykondensation kann auch in einem mehrstufigen Verfahren, ggf. unter Verwendung eines Temperaturgradienten durchgeführt werden.

Die Reaktionszeit liegt im allgemeinen im Bereich von 0,5 bis 24, vorzugsweise von 3 bis 12 h.

Das mittlere Molekulargewicht ( $\overline{M}_w$) der Polycarbonate bzw. Polyarylate liegt im allgemeinen im Bereich von 15000 bis 100.000, vorzugsweise von 20.000 bis 80.000 und insbesondere von 30.000 bis 70.000.

Die Vorteile des erfindungsgemäßen Verfahrens liegen darin, daß das Reaktionsgemisch bis zum Ende der Polykondensation sehr gut rührfähig ist und das Produktgemisch problemlos aus dem Polykondensationsreaktor ausgefahren werden kann. Darüber hinaus können nach dem erfindungsgemäßen Verfahren hochmolekulare Produkte mit vorteilhafter Eigenfarbe hergestellt werden.

Beispiel 1

In einem Reaktionsgefäß wurden unter ständigem Rühren und unter Einleiten von Stickstoff 25,5 g Bisphenol A (0,112 mol) 25,4 g (0,1185 mol) Diphenylcarbonat, 1,25 g $K_2CO_3$ und 100 g Diphenylsulfon durch Aufheizen in einem Metallbad von 175 °C aufgeschmolzen. Anschließend wurde 75 min bei 245 °C, daran anschließend 3,5 h bei 273 °C und abschließend 3 h bei 305 °C umgesetzt.

Das erhaltene Reaktionsgemisch wurde auf ein Blech gegossen, die erkaltete Schmelze gemahlen und mit Ethanol 7 h extrahiert. Anschließend wurde bei 100 °C im Vakuum getrocknet. Der K-Wert (gemessen 0,5 %ig in $CH_2O_2$) lag bei 44,5, was einem mittleren Molekulargewicht $\overline{M}_w$ von etwa 24.500 entspricht.

Aus dem Produkt wurden farblose Folien hergestellt.

Beispiel 2

Es wurde wie in Beispiel 1 verfahren, jedoch in der letzten Stufe statt 3 6 h bei 298 °C umgesetzt. Das erhaltene farblose Produkt hatte einen K-Wert (gemessen wie in Beispiel 1) von 63, was einem Molekulargewicht $\overline{M}_w$ von etwa 52.000 entspricht.

Derartig hochmolekulare farblose Produkte sind bei der Umesterung in der Schmelze praktisch nicht erhältlich.

**Ansprüche**

1. Verfahren zur Herstellung von aromatischen Polycarbonaten und Polyarylaten durch Umesterung von Kohlensäureestern oder Estern aromatischer Dicarbonsäuren mit aromatischen Dihydroxyverbindungen, dadurch gekennzeichnet, daß man die Umesterung in Lösungsmitteln der allgemeinen Formel I

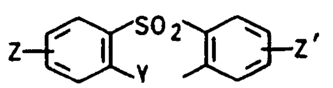

(I)

durchführt, wobei

Y eine chemische Bindung, -O- oder je ein Wasserstoffatom an den aromatischen Ringen und

Z und Z' jeweils unabhängig voneinander ein Wasserstoffatom oder eine Phenylgruppe darstellen.

2. Verfahren nach Anspruch 1, dadurch gekennzeichnet, daß man als Lösungsmittel der Formel 1 Diphenylsulfon verwendet.